# EUROPEAN PATENT APPLICATION

(11) **EP 3 316 575 A1**
(43) Date of publication of application: **02.05.2018**
(21) Application number: 16306433.0
(22) Date of filing: 31.10.2016
(51) Int. Cl.: H04N 13/00, H04N 13/04, G02B 27/22

(54) **METHOD FOR PROVIDING CONTINUOUS MOTION PARALLAX EFFECT USING AN AUTO-STEREOSCOPIC DISPLAY, CORRESPONDING DEVICE, COMPUTER PROGRAM PRODUCT AND COMPUTER-READABLE CARRIER MEDIUM**

(71) Applicant: Thomson Licensing, 92130 Issy-les-Moulineaux (FR)
(72) Inventor: DOYEN, DIDIER, 35576 Cesson Sévigné Cedex (FR); BLONDE, LAURENT, 35576 Cesson Sévigné Cedex (FR)
(74) Representative: Aumonier, Sebastien

(57) **Abstract**

A method for obtaining a multi-view image to be displayed on an auto-stereoscopic display is provided. The auto-stereoscopic display is configured to display multi-view images comprising n views forming *n*-1 successive stereoscopic pairs of views. The method for obtaining a multi-view image to be displayed comprises:
- obtaining (21), within a current multi-view image displayed on said auto-stereoscopic display, a current stereoscopic pair of views associated with a location of an observer in front of said auto-stereoscopic display;
- obtaining (22) said multi-view image to be displayed, from n views being determined responsive to said current stereoscopic pair of views, and defining a set of *n-1* successive stereoscopic pairs of views in which the current stereoscopic pair of views occupies a substantially central position.

## Description

### 1. Field of the disclosure

The present disclosure lies in the field of auto-stereoscopic displays. More precisely, the disclosure pertains to a technique for obtaining multi-view images to be displayed on an auto-stereoscopic display. The proposed technique allows providing a continuous motion parallax effect, and thus improves the immersive experience of an observer in front of the auto-stereoscopic display.

### 2. Background

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

One of the key elements to get a full immersive experience when using any display system is to be able to render what is called the motion parallax. Motion parallax offers depth cues by comparing the relative motion of different elements in a 3D scene: when an observer's head moves, closer 3D objects appear to move faster than those far away from the observer.

Some systems have been proposed to render motion parallax on standard 2D displays or on standard stereoscopic (two-views) displays. For example, some solutions exist to follow the location of an observer in front of the display (e.g. using eye-tracking techniques). It is then possible to render the motion parallax by slightly modifying the content displayed according to the observer's eyes position. However, one main problem of these systems lies in the time it takes to display the adapted content: the location tracking system takes time to evaluate the location of the observer, the adapted content must then be generated accordingly, and finally the display takes time to refresh the content on the screen. This lag between the time the observer is moving his head and the time the adapted content is available on the display is usually too high to be unnoticeable to the observer. As a result, for example, the observer can have the wrong feeling that an object displayed is moving the opposite way than the one expected, because the brain is anticipating a movement which does not occur quickly enough. The user experience is thus not optimal, and sometime deceptive and discomfortable.

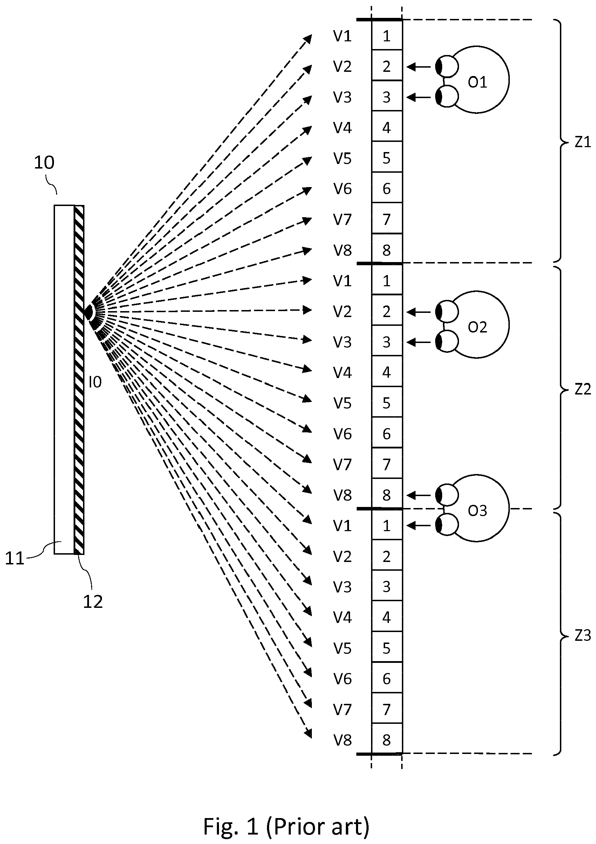

Other types of display allow a better experience in term of motion parallax. This is for example the case with auto-stereoscopic displays. As schematically illustrated in relation with **figure 1**, an example of an auto-stereoscopic display 10 is composed of a standard LCD (Liquid Crystal Display) 11 on top of which a lenticular array 12 has been placed. At a given distance, an observer will only see part of the pixels. For example, observer O1 of figure 1 can only see two sets of pixels, respectively set 2 and set 3, one per eye. If the signal is well constructed, set 2 and set 3 are the two components of a stereoscopic content. In other words, set 2 and set 3 form a stereoscopic pair of views of a same scene, allowing the observer, if well placed, to perceive stereoscopic content without the need for specific equipment such as 3D-glasses.

An auto-stereoscopic display is usually capable of displaying more than two views at the same time. On the example of figure 1, the auto-stereoscopic display 10 is designed to be able to handle eight views at the same time. These eight views are multiplexed into a single image, thus called a multi-view image, displayed on the auto-stereoscopic display. Of course, a multi-view image to be displayed on an auto-stereoscopic display is generated in a specific way: in particular, the different views of a multi-view image are selected so that they form successive stereoscopic pairs of views.

Besides, because of the optical properties of the lenticular array 12, the same eight views are visible from several different locations in front of the auto-stereoscopic display 10. For example, figure 1 shows the auto-stereoscopic display 10 displaying a multi-view image I0 comprising eight views V1 to V8. Views V1 to V8 can be observed from several different locations, e.g. from viewing zones Z1, Z2 or Z3. On the illustration of figure 1, observer O1 in viewing zone Z1 and observer 02 in viewing zone Z2 both see exactly the same content, from the same point of view. The multi-view image I0 is generated so that the eight views V1 to V8 forms seven successive stereoscopic pairs of views (V1; V2), (V2; V3), (V3; V4), (V4; V5), (V5; V6), (V6; V7), (V7; V8) that are correctly ordered in each viewing zone, i.e. adjacent views are always coherent spatially and temporally within a same viewing zone. In that way, the motion parallax is well rendered within each viewing zone (Z1, Z2, Z3): if the observer O1 keeps his head moving within the viewing zone Z1, he will enjoy an optimal immersive experience regarding motion parallax.

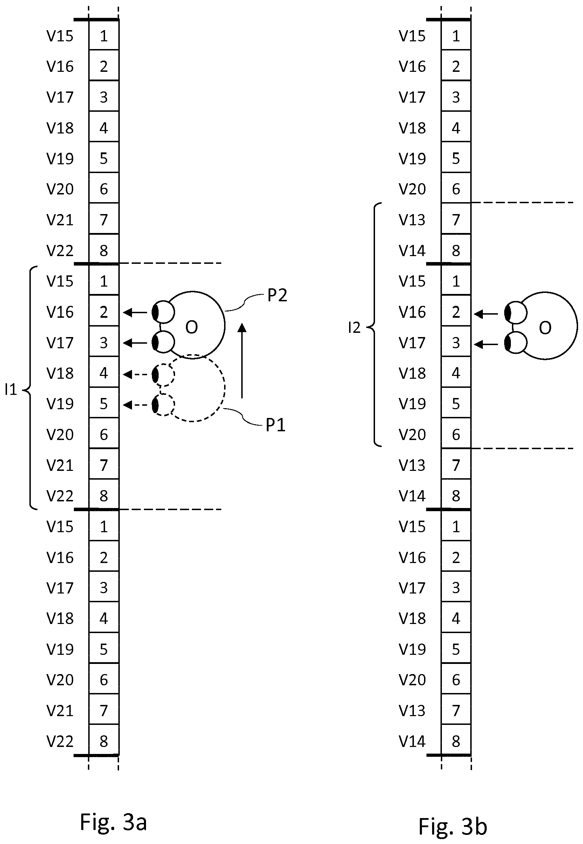

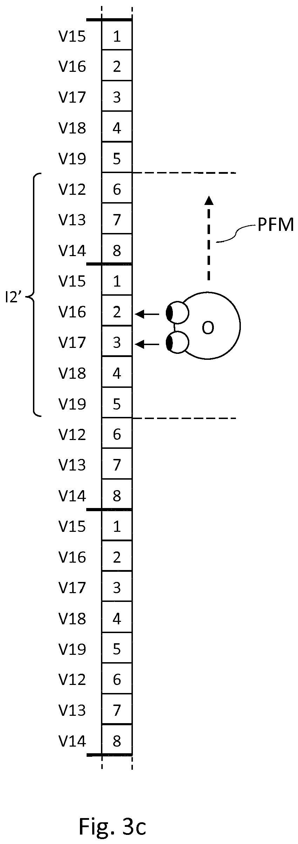

However, one drawback of the previously described technique is that a continuous motion parallax effect is restricted to a very limited zone, i.e. a narrow viewing zone. This is due to the optical properties of the lenticular array 12 previously described. For example, if the observer O3 - initially seeing stereoscopic pair of views (V1; V2) from viewing zone Z3 - moves his head to his right, to a position where he sees stereoscopic pair of views (V7; V8) from viewing zone Z2, he won't see a continuous and coherent motion parallax effect since pairs of views (V1; V2), (V8; V1) and (V7; V8) do not form coherent successive stereoscopic pairs of views. In the transition zone where the observer 03 sees the pair of views (V8; V1), as represented in figure 3, he may even not be able to perceive stereoscopic content anymore, since V1 and V8 are not supposed to form together a stereoscopic pair of views at all. Thus, if an observer watches the content from a position close to a viewing zone boundary, a small move of his head may be enough to cross the boundary between two viewing zones, and the motion parallax is then not respected anymore during this small move. As a consequence, the user experience is degraded and deceptive.

It would hence be desirable to provide a technique for providing motion parallax effect that would avoid at least one drawback of the prior art.

### 3. Summary

According to an aspect of the present disclosure, a method for obtaining a multi-view image to be displayed on an auto-stereoscopic display is provided. The auto-stereoscopic display is configured to display multi-view images comprising n views forming *n*-1 successive stereoscopic pairs of views. The proposed method for obtaining a multi-view image to be displayed comprises:
- obtaining, within a current multi-view image displayed on said auto-stereoscopic display, a current stereoscopic pair of views associated with a location of an observer in front of said auto-stereoscopic display;
- obtaining said multi-view image to be displayed, from n views determined responsive to said current stereoscopic pair of views, and defining a set of *n-1* successive stereoscopic pairs of views in which the current stereoscopic pair of views occupies a substantially central position.

In that way, the content displayed on the auto-stereoscopic display can be automatically adapted depending on the location of the observer. In particular, the multi-view image to be displayed on the auto-stereoscopic display is obtained from n views determined so that they form a set of *n*-1 successive stereoscopic pairs of views centred on the observer location. In this manner, by iterating the proposed method, the content displayed on the auto-stereoscopic display may thus be constantly adapted so that the observer is always substantially located at the centre of a zone in which motion parallax effect is respected.

According to an embodiment, obtaining said multi-view image to be displayed takes into account said location of the observer in front of said auto-stereoscopic display.

In that way, the multi-view image to be displayed may be generated so that the current stereoscopic pair of views is still associated with the predetermined location of the observer in front of said auto-stereoscopic display. In that way, if the observer hasn't moved again after having reached said predetermined location, he will not notice any undesirable artefact when the image displayed on the auto-stereoscopic display changes to the newly obtained multi-view image: he still sees the scene with the same point of view. Besides, the multi-view image to be displayed may also be generated so that the optical properties of the auto-stereoscopic display are taken into account. More particularly, the fact that the same views are repeated at predetermined intervals due to optical properties of the lenticular array of the auto-stereoscopic display is taken into account: the multi-view image is generated according to the position of the observer in a way that makes adjacent views always coherent spatially and temporally. Thus, for any limited movement of the head, even fast, the observer is sure to see only adjacent and coherent content.

According to an embodiment, n is an even number, and the n views being determined responsive to said current stereoscopic pair of views defines a set of *n-1* successive stereoscopic pairs of views in which the current stereoscopic pair of views occupies the position of rank *n*/*2.*

In that way, the current stereoscopic pair of views occupies the exact central position within the set of *n*-*1* successive stereoscopic pairs of views. A continuous motion parallax effect is thus provided, whether the observer moves his head to his right or to his left.

According to another embodiment, n is an odd number, and the n views being determined responsive to said current stereoscopic pair of views defines a set of *n-1* successive stereoscopic pairs of views in which the current stereoscopic pair of views occupies the position of rank *(n-1)*/*2* or *(n+1)*/*2.*

In that way, the current stereoscopic pair of views occupies a substantially central position within the set of *n*-1 successive stereoscopic pairs of views. A continuous motion parallax effect is thus provided, whether the observer moves his head to his right or to his left, even if there is no exact central position within the set of n-1 successive stereoscopic pairs of views.

According to an embodiment, determining the n views responsive to said current stereoscopic pair of views further takes account of a direction of motion of said observer to reach said location of the observer in front of the auto-stereoscopic display.

In that way, depending of said direction of motion, it is possible to estimate the direction in which the observer is likely to move afterwards, and thus determine the *n* views of the multi-view image accordingly. In particular, while still occupying a substantially central position within the set of *n*-1 successive stereoscopic pairs of views, the current stereoscopic pair of views may be slightly offset within said set of *n-1* successive stereoscopic pairs of views in order to give more latitude, in term of coherent motion parallax effect, in the direction of a presumed future motion of the observer.

According to an embodiment, determining said n views responsive to said current stereoscopic pair of views comprises interpolating at least one of said n views.

In that way, some views that were not acquired by the image acquisition system used to capture a scene may be interpolated within the device for implementing the proposed technique itself, for example within the auto-stereoscopic display itself. Others views already available are used to perform such an interpolation. In that way, it is possible to save some bandwidth on the link between a content provider and a receiving device, since there is no need to transmit all the views that may be useful to generate a new multi-view image: some of them may be interpolated at the auto-stereoscopic display level.

According to an embodiment, obtaining the current stereoscopic pair of views takes into account the position of the eyes of said observer.

The present disclosure also concerns a device for obtaining a multi-view image to be displayed on an auto-stereoscopic display. The auto-stereoscopic display is configured to display multi-view images comprising n views forming *n-1* successive stereoscopic pairs of views. Such a device comprises:
- a module for obtaining, within a current multi-view image displayed on said auto-stereoscopic display, a current stereoscopic pair of views associated with a location of an observer in front of said auto-stereoscopic display;
- a module for obtaining said multi-view image to be displayed, from n views being determined responsive to said current stereoscopic pair of views, and defining a set of *n-1* successive stereoscopic pairs of views in which the current stereoscopic pair of views occupies a substantially central position.

According to one implementation, the different steps of the method for obtaining a multi-view image to be displayed on an auto-stereoscopic display as described here above are implemented by one or more software programs or software module programs comprising software instructions intended for execution by a data processor of an apparatus for obtaining a multi-view image to be displayed on an auto-stereoscopic display, these software instructions being designed to command the execution of the different steps of the methods according to the present principles.

A computer program is also disclosed that is capable of being executed by a computer or by a data processor, this program comprising instructions to command the execution of the steps of a method for obtaining a multi-view image to be displayed on an auto-stereoscopic display as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or a magnetic recording means, for example a floppy disk or a hard disk drive.

Again, the information carrier can be a transmissible carrier such as an electrical or optical signal which can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

A non-transitory processor readable medium having stored thereon such a program is also disclosed.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### 4. Brief description of the drawings

Embodiments of the present disclosure can be better understood with reference to the following description and drawings, given by way of example and not limiting the scope of protection, and in which:
- **Figure 1****,** already described, presents an example of structure of a conventional auto-stereoscopic display and how it works;
- **Figure 2** is a flow chart for illustrating the general principle of the proposed technique for obtaining a multi-view image to be displayed on an auto-stereoscopic display, according to an embodiment of the present disclosure;
- **Figure 3a, 3b** and **3c** illustrate how a multi-view image is generated, according to different embodiment of the present disclosure;
- **Figure 4** shows an example of an image acquisition system that may be used to obtain the views used to generate multi-view images to be displayed on an auto-stereoscopic display, according to an embodiment of the present disclosure;
- **Figure 5** is a schematic block diagram illustrating an example of an apparatus for obtaining multi-view images to be displayed on an auto-stereoscopic display, according to an embodiment of the present disclosure.

The components in the figures are not necessarily to scale, emphasis instead being placed upon illustrating the principles of the disclosure.

### 5. Detailed description

The general principle of the present disclosure relies on a specific technique for obtaining multi-view images to be displayed on an auto-stereoscopic display.

As it will be described more fully hereafter with reference to the accompanying figures, it is proposed in one aspect of the present disclosure to take account of a location of an observer in front of an auto-stereoscopic display to adapt the content displayed, so that a continuous motion parallax effect that allows a more optimal immersive experience can be provided.

This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims. Like numbers refer to like elements throughout the description of the figures.

While not explicitly described, the present embodiments and variants may be employed in any combination or sub-combination.

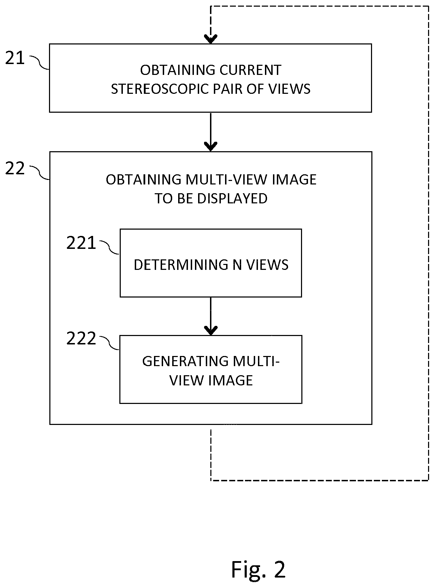

**Figure 2** is a flow chart for explaining a method for obtaining a multi-view image to be displayed on an auto-stereoscopic display according to an embodiment of the present disclosure. The auto-stereoscopic display is configured to display multi-view images comprising n views forming *n-1* successive stereoscopic pairs of views (n being an integer strictly greater than two). **Figure 3a, 3b** **and** **3c** illustrate the method presented in relation with figure 2 on a specific example.

Referring first to figure 3a, it is assumed that a multi-view image I1 is displayed (or was just displayed) on an auto-stereoscopic display (not represented) designed to handle several views at the same time (eight in the example shown). Multi-view image I1 comprises eight views (V15, V16, V17, V18, V19, V20, V21, V22) that form seven successive stereoscopic pairs of views of a same scene: (V15; V16), (V16; V17), (V17; V18), (V18; V19), (V19; V20), (V20; V21), (V21; V22). It is further assumed that the head of an observer O, watching the content displayed on the auto-stereoscopic display, has moved from position P1 to position P2. Figure 3a shows this initial situation.

At step 21, the current stereoscopic pair of views of I1 associated with the current location of an observer O is obtained. This current stereoscopic pair of views corresponds to the stereoscopic pair of views of I1 the observer actually sees, from his location in front of the auto-stereoscopic display. It can be easily determined, since characteristics of the auto-stereoscopic display are well known. For example, in the situation illustrated in figure 3a, the current stereoscopic pair of views associated with the location P2 of the observer is the pair (V16; V17). By location of the observer, it is meant in the present disclosure the location of the head of the observer. According to an embodiment, techniques such as eyes tracking may be employed to determine this location.

At step 22, the current stereoscopic pair of views is used to obtain a new multi-view image to be displayed on the auto-stereoscopic display. In one embodiment of the present disclosure, step 22 for obtaining a new multi-view image to be displayed on the auto-stereoscopic display comprises determining (221) *n* views responsive to the current stereoscopic pair of views, and generating (222) the multi-view image to be displayed from said n views previously determined. In other words, the n views are determined as a function of the current stereoscopic pair of views: these n views comprise the two views of the current stereoscopic pair of views, and the n-2 remaining views are selected so that they form, with the current stereoscopic pair of views, *n-1* successive stereoscopic pairs of views in which the current stereoscopic pair of views occupies a substantially central position. According to an embodiment, if *n* is an even number, the *n-2* remaining views are selected so that the current stereoscopic pair of views occupies the exact central position in the *n-1* successive stereoscopic pairs of views, which is position with rank *n*/*2.* Figure 3b illustrates such an embodiment, with *n* being equal to eight. As seen in relation with figure 3a, the current stereoscopic pair of views is (V16; V17). In addition to views V16 and V17, views V13, V14, V15, V18, V19 and V20 are then determined, so that these eight views forms seven successive stereoscopic pairs of views of the scene, the current stereoscopic pair of views (V16; V17) occupying the central position, which is the position with rank four, within the successive stereoscopic pairs of views: (V13; V14), (V14; V15), (V15; V16), (V16; V17), (V17; V18), (V18; V19), (V19; V20). If *n* is an odd number, there is no exact central position within the *n-1* successive stereoscopic pairs of views. Therefore, according to another embodiment of the proposed technique, the n views are determined so that the current stereoscopic pair of views occupies position with rank *(n-1)*/*2* or *(n+1)*/*2,* which correspond to substantially central positions within the *n-1* successive stereoscopic pairs of views.

According to another embodiment of the proposed disclosure, at step 22, a direction of motion of the observer in front of the auto-stereoscopic display is also taken into account to determine the *n* views that will be used to generate a new multi-view image to be displayed on the auto-stereoscopic display. Such information regarding motion direction is useful, since it helps to estimate the direction (left or right) in which the observer is likely to move afterwards. For example, referring back to figure 3a, by analysing successive measured positions P1 and P2 of the observer in front of the auto-stereoscopic display, it can be determined that the observer has moved his head to his right to reach position P2. When position P2 is obtained, there is a probability that the observer has not finished his motion and continues moving to his right afterwards. As a result, it may be useful to slightly offset position of the current stereoscopic pair of views within the set of *n-1* successive stereoscopic pairs of views, in order to keep more latitude in the direction of the presumed future motion of the observer, while still keeping the current stereoscopic pair of views at a substantially central position in case this assumption on motion direction proves to be wrong afterwards. Figure 3c shows a result of such an embodiment (still assuming that situation of figure 3a is the initial situation). In addition to views V16 and V17, views V12, V13, V14, V15, V18 and V19 are now determined, so that these eight views forms seven successive stereoscopic pairs of views of the scene. The current stereoscopic pair of views (V16; V17) still occupies a substantially central position, but not the exact central position, within the set of successive stereoscopic pairs of views: (V12; V13), (V13; V14), (V14; V15), (V15; V16), (V16; V17), (V17; V18), (V18; V19). As illustrated in figure 3b, this offset of the current stereoscopic pair of views within the set of successive stereoscopic pairs of views offers more latitude, in term of coherent motion parallax effect, in the direction of a presumed future motion PFM of the observer. In other words, the knowledge of the previous direction of motion of the observer allows estimating the direction in which the observer is more likely to move afterwards, and can thus be used to determine the n views of a new multi-view image to be displayed on the auto-stereoscopic display accordingly, to maximize the chances of providing a coherent motion parallax effect.

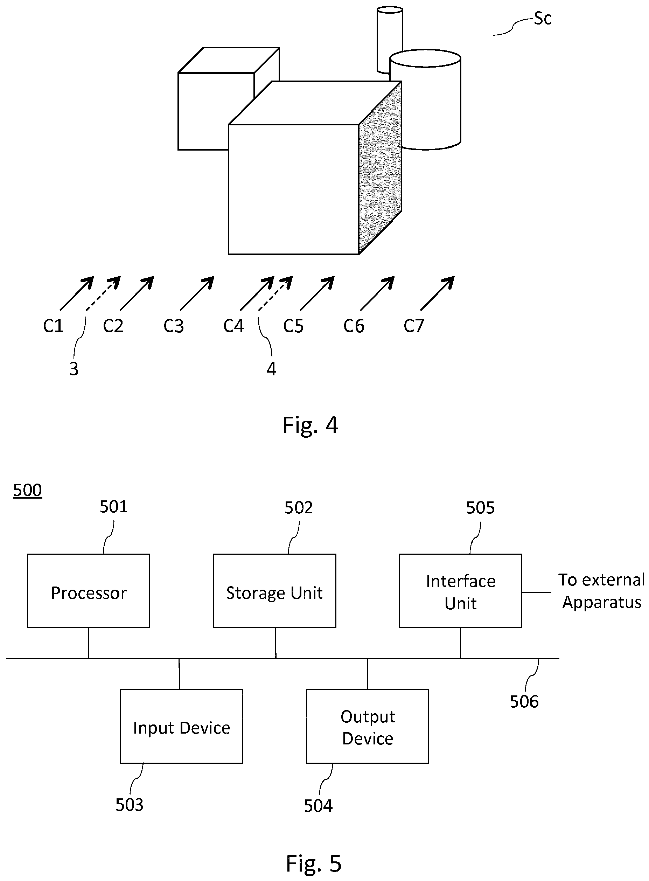

As it can be noticed on the examples of figure 3a, 3b, and 3c, the number of views required to implement the proposed technique is greater than the number of views that can be displayed by an auto-stereoscopic display at the same time. The more views of a same scene from different points of views are available, the more it will be possible to render an extended coherent motion parallax effect. For example, thirty views V1 to V30 of a same scene may be available, each corresponding to a different point of view, while the auto-stereoscopic display can only handle eight views at the same time. The views used to generate a new multi-view image correspond either to views captured with some real capture devices, or to virtual views interpolated from the views captured by the capture devices. For example, as illustrated in relation with **figure 4****,** an image acquisition system comprising seven real cameras C1 to C7 is used to capture a scene Sc, thus providing, at a given time, seven different views of the scene Sc. From these seven views captured with real cameras, other views may be interpolated. For example, views that would have been obtained if some cameras had been placed at positions 3 or 4 represented in figure 4 may be interpolated. View interpolation, when needed, may be done at the image acquisition system level itself. Alternatively, according to an embodiment of the proposed technique, determining the n views of a multi-view image to be displayed on the auto-stereoscopic display comprises interpolating at least one of said n views, from others views already available. Interpolating some views at a receiving device level (such as at the auto-stereoscopic display level) may for example be interesting to save some bandwidth on the link used to transmit data between a content provider and said receiving device.

In the embodiment illustrated in figure 2, the n views previously determined are used to generate a multi-view image to be displayed on the auto-stereoscopic display, at step 222. According to an embodiment of the proposed technique, the generation of the multi-view image to be displayed - in other words, the way the n views are multiplexed into a single multi-view image - takes account of the location of the observer in front of the auto-stereoscopic display. The multi-view image to be displayed may thus be generated so that the current stereoscopic pair of views is still associated with the predetermined location of the observer in front of said auto-stereoscopic display. This is for example illustrated in figure 3b, where a multi-view image I2 to be displayed is generated from views V13 to V20 determined at step 21. I2 is indeed generated so that current stereoscopic pair of views (V16; V17) is still associated to position P2 of the observer. In that way, if the observer hasn't moved again after having reached position P2, he will not notice any undesirable artefact when the image displayed on the auto-stereoscopic display changes from I1 to I2: he still sees the scene with the same point of view. As further illustrated in figure 3b, the fact that the same views are repeated at predetermined intervals due to optical properties of the lenticular array of the auto-stereoscopic display is also taken into account: the multi-view image is generated according to the location of the observer in front of the auto-stereoscopic display, so that the successive stereoscopic pairs of views are always substantially centred on the observer.

By iterating the proposed method, the content displayed on the auto-stereoscopic display may thus be constantly adapted so that the observer is always substantially located at the centre of a zone in which motion parallax effect is respected. In other words, the multi-view image displayed on the auto-stereoscopic display is generated so that the observer is maintained, as far as possible, at a certain distance from transition zones, namely zones where the continuity of the motion parallax effect is broken, such as the one corresponding to the location of observer 03 in figure 1. In that way, for any limited move of the head, even fast, whatever its direction (left of right), the motion parallax effect is respected since stereoscopic pairs of views that are adjacent to the current stereoscopic pair of views are already displayed on the auto-stereoscopic display (they belong to the same multi-view image, displayed on the auto-stereoscopic display). As for move of higher amplitude, provided they are not too fast, the proposed technique allows the multi-view image displayed on the auto-stereoscopic display to be refreshed before the observer reaches a transition zone.

According to the present disclosure, the observer can thus benefit from a continuous motion parallax effect all along the motion of his head. The implementation of the proposed technique has many advantages compared to prior art solutions: it offers time to refresh a multi-view image, allowing rendering a continuous horizontal motion parallax effect which is not limited to a narrow viewing zone, with unperceivable latency for the observer. The immersive experience is thus improved.

**Figure 5** is a schematic block diagram illustrating an example of a device for obtaining a multi-view image to be displayed on an auto-stereoscopic display according to an embodiment of the present disclosure. In an embodiment of the proposed technique, such a device may be embedded in an auto-stereoscopic display. In another embodiment, it may be an external device connected to an auto-stereoscopic display.

An apparatus 500 illustrated in figure 5 includes a processor 501, a storage unit 502, an input device 503, an output device 504, and an interface unit 505 which are connected by a bus 506. Of course, constituent elements of the computer apparatus 500 may be connected by a connection other than a bus connection using the bus 506.

The processor 501 controls operations of the apparatus 500. The storage unit 502 stores at least one program to be executed by the processor 501, and various data, including for example parameters used by computations performed by the processor 501, intermediate data of computations performed by the processor 501, and so on. The processor 501 is formed by any known and suitable hardware, or software, or a combination of hardware and software. For example, the processor 501 is formed by dedicated hardware such as a processing circuit, or by a programmable processing unit such as a CPU (Central Processing Unit) that executes a program stored in a memory thereof.

The storage unit 502 is formed by any suitable storage or means capable of storing the program, data, or the like in a computer-readable manner. Examples of the storage unit 502 include non-transitory computer-readable storage media such as semiconductor memory devices, and magnetic, optical, or magneto-optical recording media loaded into a read and write unit. The program causes the processor 501 to perform a process for obtaining a multi-view image to be displayed on an auto-stereoscopic display according to an embodiment of the present disclosure as described previously. More particularly, the program causes the processor 501 to generate a multi-view image to be displayed on an auto-stereoscopic display. The views used to generate such multi-view image may be stored into storage unit 502.

The input device 503 is formed for example by a device for determining the location of an observer in front of an auto-stereoscopic display. For example, input device 503 is an eye-tracking device.

The output device 504 is formed for example by an auto-stereoscopic display to display the multi-view image generated by applying the method for obtaining a multi-view image previously described.

The interface unit 505 provides interfaces between the apparatus 500 and external apparatus. The interface unit 505 may be communicable with external apparatus via cable or wireless communication. For example, in an embodiment where the device for obtaining a multi-view image is not embedded in an auto-stereoscopic display, an external apparatus may be such an auto-stereoscopic display. The device for determining the location of an observer may also be an external apparatus, if such a device is not embedded in the device for obtaining a multi-view image according to the proposed technique.

Although only one processor 501 is shown on figure 7, it must be understood that such a processor may comprise different modules and units embodying the functions carried out by apparatus 500 according to embodiments of the present disclosure, such as:
- a module for obtaining, within a current multi-view image displayed on said auto-stereoscopic display, a current stereoscopic pair of views associated with a location of an observer in front of said auto-stereoscopic display;
- a module for obtaining said multi-view image to be displayed, from *n* views determined responsive to said current stereoscopic pair of views, and defining a set of *n-1* successive stereoscopic pairs of views in which the current stereoscopic pair of views occupies a substantially central position.

These modules and units may also be embodied in several processors 501 communicating and co-operating with each other.

## Claims

1. A method for obtaining a multi-view image to be displayed on an auto-stereoscopic display, said auto-stereoscopic display being configured to display multi-view images comprising *n* views forming *n-1* successive stereoscopic pairs of views, wherein said method comprises:
- obtaining (21), within a current multi-view image displayed on said auto-stereoscopic display, a current stereoscopic pair of views associated with a location of an observer in front of said auto-stereoscopic display;
- obtaining (22) said multi-view image to be displayed, from *n* views being determined responsive to said current stereoscopic pair of views, and defining a set of *n-1* successive stereoscopic pairs of views in which the current stereoscopic pair of views occupies a substantially central position.

2. The method of claim 1, wherein obtaining said multi-view image to be displayed takes into account said location of the observer in front of said auto-stereoscopic display.

3. The method of claim 1, wherein *n* is an even number, and said *n* views being determined responsive to said current stereoscopic pair of views defines a set of *n-1* successive stereoscopic pairs of views in which the current stereoscopic pair of views occupies the position of rank *n*/*2.*

4. The method of claim 1, wherein *n* is an odd number, and said *n* views being determined responsive to said current stereoscopic pair of views defines a set of *n-1* successive stereoscopic pairs of views in which the current stereoscopic pair of views occupies the position of rank *(n-1)*/*2* or *(n+1)*/*2.*

5. The method of claim 1, wherein determining said *n* views responsive to said current stereoscopic pair of views further takes account of a direction of motion of said observer to reach said location of the observer in front of said auto-stereoscopic display.

6. The method of claim 1, wherein determining said *n* views responsive to said current stereoscopic pair of views comprises interpolating at least one of said *n* views.

7. The method of claim 1, wherein obtaining said current stereoscopic pair of views takes into account the position of the eyes of said observer.

8. A device for obtaining a multi-view image to be displayed on an auto-stereoscopic display, said auto-stereoscopic display being configured to display multi-view images comprising *n* views forming *n-1* successive stereoscopic pairs of views, wherein said device comprises:
- a module for obtaining, within a current multi-view image displayed on said auto-stereoscopic display, a current stereoscopic pair of views associated with a location of an observer in front of said auto-stereoscopic display;
- a module for obtaining said multi-view image to be displayed, from *n* views being determined responsive to said current stereoscopic pair of views, and defining a set of *n-1* successive stereoscopic pairs of views in which the current stereoscopic pair of views occupies a substantially central position.

9. A computer program product downloadable from a communication network and/or recorded on a medium readable by a computer and/or executable by a processor, comprising program code instructions for implementing a method according to any one of claims 1 to 7.

10. A non-transitory computer-readable medium comprising a computer program product recorded thereon and capable of being run by a processor, including program code instructions for implementing a method according to any one of claims 1 to 7.
